# FASCICULE DE BREVET EUROPEEN

(11) **EP 2 173 603 B1**
(45) Date de publication et mention de la délivrance du brevet: **04.05.2011**
(21) Numéro de dépôt: 08844328.8
(22) Date de dépôt: 07.08.2008
(51) Int. Cl.: B62D 33/073, F16C 1/12, F16H 61/36

(54) **SYSTEME DE COMMANDE PAR CABLE ET/OU PAR TIGE D'UNE BOITE DE VITESSES POUR POIDS LOURD A CABINE BASCULANTE**
KABEL- UND/ODER STANGENSTEUERUNGSSYSTEM FÜR EIN GETRIEBE EINES SCHWERLASTFAHRZEUGS MIT KIPPKABINE
CABLE AND/OR ROD CONTROL SYSTEM FOR A GEARBOX ON A HEAVY GOODS VEHICLE WITH A TILTING CAB

(30) Priorité: 09.08.2007 FR 0705797
(43) Date de publication de la demande: 14.04.2010
(73) Titulaire: Société Européenne de Fabrications Industrielles-SEFI, 38210 Tullins (FR)
(72) Inventeur: FERRON, Michel, F-38500 Voiron (FR)
(74) Mandataire: Maureau, Philippe
(86) Numéro de dépôt international: PCT/FR2008/001176
(87) Numéro de publication internationale: WO 2009/056694

(56) Documents cités:
- EP-A- 0 084 239
- EP-A- 0 999 084
- DE-A1- 2 748 074
- DE-A1- 19 735 289
- FR-A- 2 805 578
- JP-U- 3 114 666

## Description

La présente invention concerne un système de commande par câble et/ou par tige d'une boîte de vitesses pour poids lourd à cabine basculante.

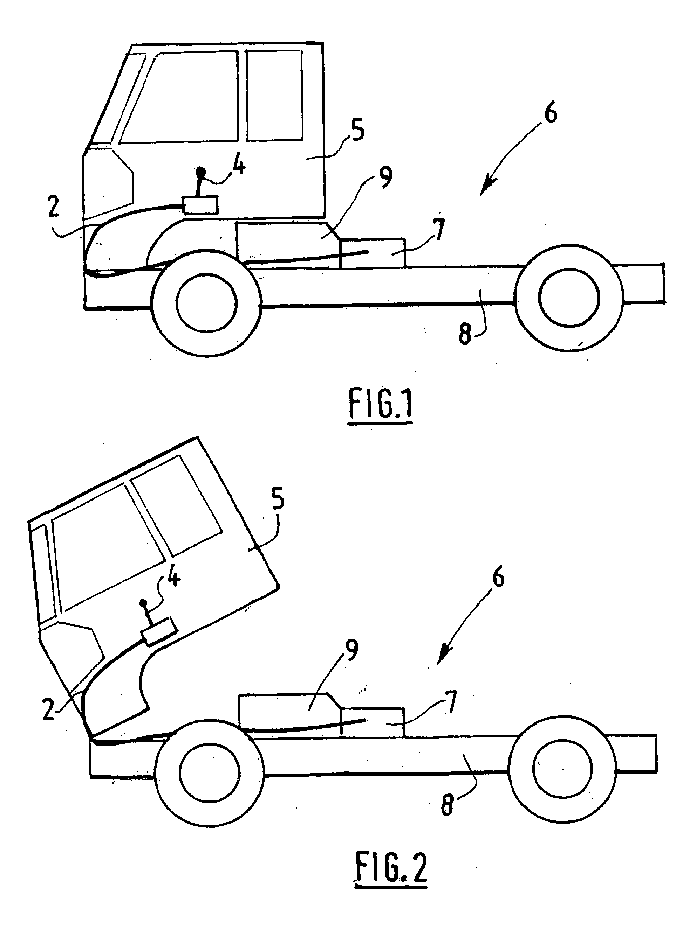

Comme représenté sur les figures 1 et 2, un tel système de commande comprend, de façon connue, un câble de commande 2 dont l'une des extrémité est reliée à un levier de vitesse 4 logé dans la cabine 5 d'un poids lourd 6 et dont l'autre extrémité est reliée à une boîte de vitesses 7 montée sur le châssis 8 du poids lourd et agencée pour adapter le couple moteur et le sens de rotation du moteur 9 du poids lourd.

Compte tenu du fait que la cabine 5 est mobile entre une position de fonctionnement dans laquelle elle repose sur le châssis 8 du poids lourd (représentée sur la figure 1) et une position basculée (représentée sur la figure 2), il est nécessaire de faire passer le câble de commande 2 au niveau de l'articulation de la cabine 5 de manière à éviter les risques liés à la présence d'un câble tendu entre la cabine et le châssis en position basculée de la cabine.

Cette disposition du câble de commande 2 nécessite une longueur de câble importante qui rend complexe le montage du système de commande sur le poids lourd, puisque cette opération est réalisée après montage de la cabine sur le châssis et qu'elle nécessite le contournement de nombreux organes mécaniques.

De plus, cette disposition du câble de commande génère des flexions alternées du câble au niveau de l'articulation de la cabine durant les basculements de la cabine. Ces flexions alternées du câble peuvent entraîner une usure du câble qui peut conduire à des dysfonctionnements du système de commande.

Le document EP 0 999 084 décrit un système de commande selon le préambule de la revendication 1.

La présente invention vise à remédier ces inconvénients, et elle a de préférence pour but de fournir un système de commande d'une boîte de vitesses pour poids lourd à cabine basculante qui soit de structure simple, qui ne nécessite pas une longueur de câble ou de tige importante, tout en permettant un montage aisé du système de commande sur un poids lourd.

A cet effet, la présente invention concerne un système de commande par câble et/ou par tige selon la revendication 1.

Le montage d'un premier ensemble sur la cabine du poids lourd et d'un second ensemble sur le châssis du poids lourd destinés à coopérer entre eux en position de fonctionnement de la cabine permet d'éviter de faire passer le moyen de commande au niveau de l'articulation de la cabine et donc de limiter la longueur de ce dernier.

De plus, cette structure du système de commande permet de faciliter le montage du système de commande sur le poids lourd, puisque les deux ensembles peuvent être montés séparément respectivement sur la cabine et sur le châssis, avant assemblage de ceux-ci.

Avantageusement, au moins l'un des moyens de commande est un câble de commande ou une tige de commande.

Selon un aspect de l'invention, chaque levier d'actionnement comprend au moins deux portions de contact disposées de part et d'autre de son axe de pivotement, les deux portions de contact du levier d'actionnement appartenant au premier ensemble étant destinées à coopérer avec les deux portions de contact du levier d'actionnement appartenant au second ensemble, en position de fonctionnement de la cabine.

Selon un autre aspect de l'invention, au moins un élément d'amortissement est disposé entre les deux leviers d'actionnement, au niveau de chaque zone de contact entre les deux leviers d'actionnement.

Selon encore un autre aspect de l'invention, les deux leviers d'actionnement sont montés pivotant autour d'un axe coïncidant. Ces dispositions permettent de limiter l'usure entre les portions de contact des deux leviers de commande.

Avantageusement, chaque levier d'actionnement présente une forme sensiblement en T comportant une première et une seconde branches, et l'axe de pivotement de chaque levier est situé sensiblement dans la zone de liaison entre les première et une seconde branches.

Selon une autre caractéristique de l'invention, les deux portions de contact de chaque levier d'actionnement sont disposées au niveau des extrémités de la branche du levier d'actionnement correspondant s'étendant de part et d'autre de l'axe de pivotement de ce levier d'actionnement, et le moyen de commande correspondant à ce levier d'actionnement est relié à ce dernier au niveau de l'extrémité libre de l'autre branche de ce levier d'actionnement.

Avantageusement, les deux portions de contact de chaque levier d'actionnement sont constituées par deux retours ménagés respectivement aux extrémités de la branche du levier d'actionnement s'étendant de part et d'autre de l'axe de pivotement de ce levier d'actionnement et s'étendant sensiblement perpendiculairement à cette branche.

De préférence, la liaison entre un moyen de commande et le levier d'actionnement correspondant comprend un axe solidaire du levier d'actionnement autour duquel est monté pivotant un manchon solidaire de l'extrémité du moyen de commande située du côté du levier d'actionnement.

Avantageusement, le premier ensemble comprend un boîtier ouvert monté sur la cabine, l'ouverture du boîtier étant située du côté du châssis en position de fonctionnement de la cabine, le levier d'actionnement appartenant au premier ensemble étant logé dans le boîtier.

De préférence, le second ensemble comprend un boîtier ouvert monté sur le châssis, l'ouverture du boîtier étant située du côté de la cabine en position de fonctionnement de la cabine, le levier d'actionnement appartenant au second ensemble étant logé dans le boîtier.

Selon une caractéristique de l'invention, les boîtiers appartenant au premier et au second ensembles comprennent des moyens de positionnement et de verrouillage des boîtiers en position de fonctionnement de la cabine. Ces dispositions permettent d'éviter un écartement des boîtiers en position de fonctionnement de la cabine qui pourrait entraîner une mauvaise coopération des leviers de commande et donc un dysfonctionnement du système de commande.

De préférence, les moyens de positionnement des boîtiers comprennent une pluralité de tétons ménagés sur l'un des boîtiers, et une pluralité de lumières ménagées sur l'autre boîtier, les tétons étant destinés à être reçus dans les lumières de manière à positionner les deux boîtiers l'un par rapport à l'autre en position de fonctionnement de la cabine.

Selon une caractéristique de l'invention, les moyens de verrouillage des boîtiers comprennent une plaque de verrouillage mobile entre une position de verrouillage des boîtiers et une position de libération des boîtiers.

Avantageusement, chaque ensemble comprend deux câbles de commande, à savoir un câble de sélection de vitesse et un câble de passage de vitesse et deux leviers d'actionnement, à savoir un levier de sélection de vitesse et un levier de passage de vitesse, les câbles et leviers de sélection de vitesse des deux ensembles coopérant entre eux en position de fonctionnement de la cabine de manière à permettre une sélection d'une vitesse de la boîte de vitesses par action du levier de vitesse par un utilisateur, et les câbles et leviers de passage de vitesse des deux ensembles coopérant entre eux en position de fonctionnement de la cabine de manière à permettre un passage d'une vitesse de la boîte de vitesses par action du levier de vitesse par un utilisateur.

De toute façon l'invention sera bien comprise à l'aide de la description qui suit, en référence au dessin schématique indexé représentant, à titre d'exemple non limitatif, une forme d'exécution de ce système de commande.
Figures 1 et 2 sont des vues schématiques de côté d'un poids lourd équipé d'un système de commande par câble de boîte de vitesses selon l'art antérieur, montrant deux positions différentes de la cabine du poids lourd.
Figures 3 et 4 sont des vues schématiques de côté d'un poids lourd équipé d'un système de commande par câble de boîte de vitesses selon l'invention, montrant deux positions différentes de la cabine du poids lourd.
Figure 5 est une vue en perspective du système de commande des figures 3 et 4 avant coopération des différents leviers, une partie de l'un des boîtiers ayant été enlevée pour des raisons de clarté.
Figure 6 est une vue partielle en perspective du système de commande des figures 3 et 4 en position de fonctionnement de la cabine, les boîtiers logeant les différents leviers ayant été enlevés pour des raisons de clarté.

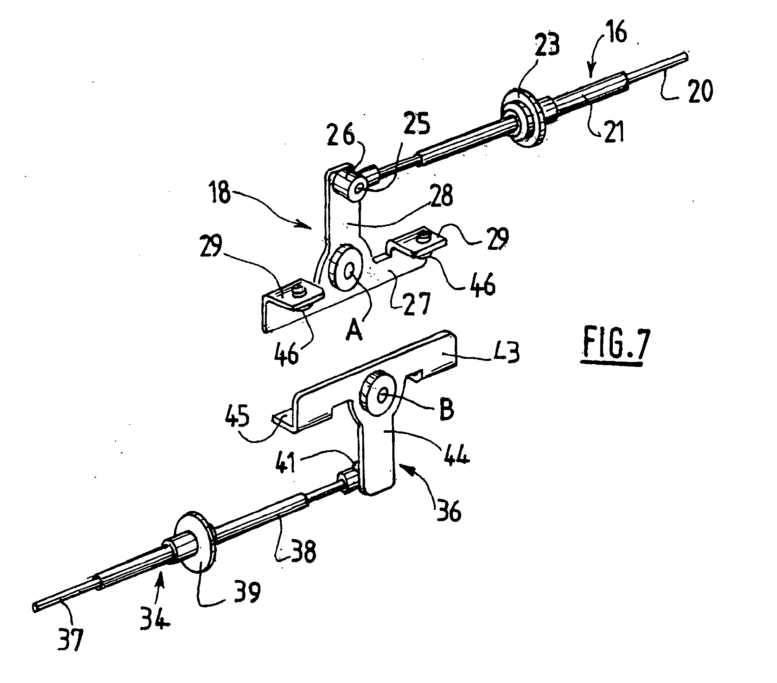

Figure 7 est une vue en perspective des câbles et des leviers de passage de vitesse.
Figures 8 et 9 sont des vues en perspective de dessous du système de commande des figures 3 et 4.
Figure 10 est une vue schématique du fonctionnement du levier de vitesse du poids lourds équipé du système de commande selon l'invention.

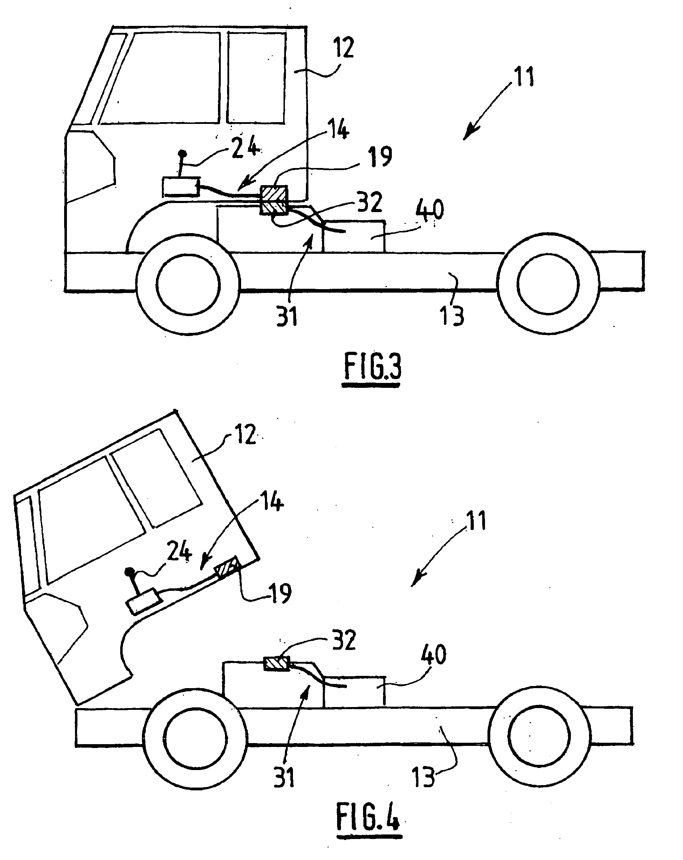

Les figures 3 et 4 représentent un poids lourd 11 à cabine basculante équipé d'un système de commande par câble d'une boîte de vitesses. La cabine 12 du poids lourd est mobile entre une position de fonctionnement (représentée sur la figure 3) dans laquelle elle repose sur le châssis 13 du poids lourd 11 et une position basculée (représentée sur la figure 4).

Le système de commande comprend un premier ensemble 14 monté sur la cabine 12 du poids lourd 11.

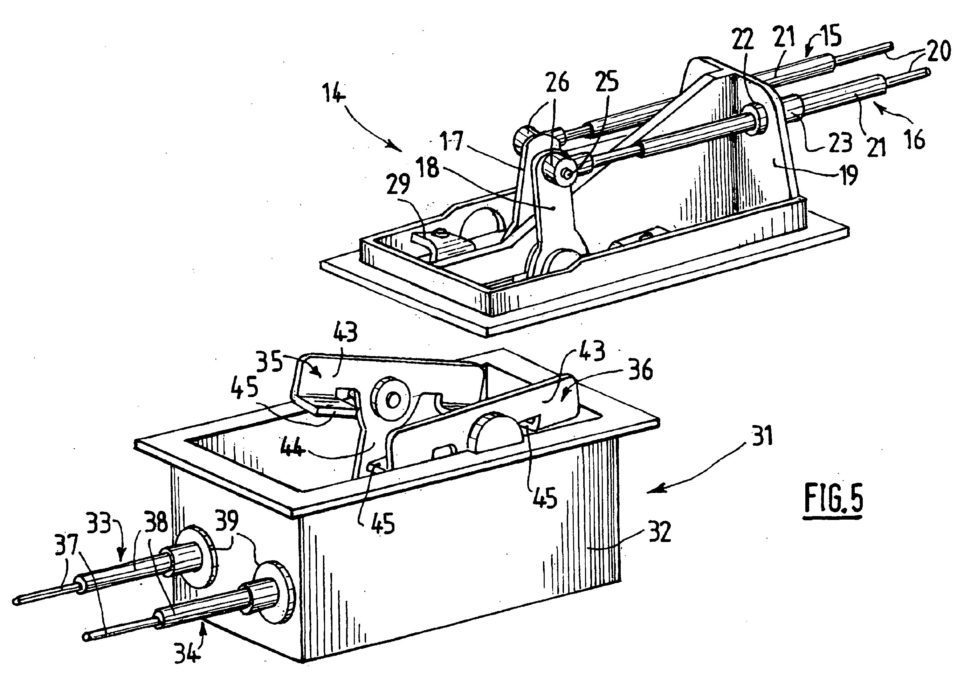

Comme montré plus particulièrement sur la figure 5, le premier ensemble 14 comprend un boîtier ouvert 19 monté sur la cabine 12, l'ouverture du boîtier 19 étant située du côté du châssis 13 du poids lourd 11 en position de fonctionnement de la cabine 12.

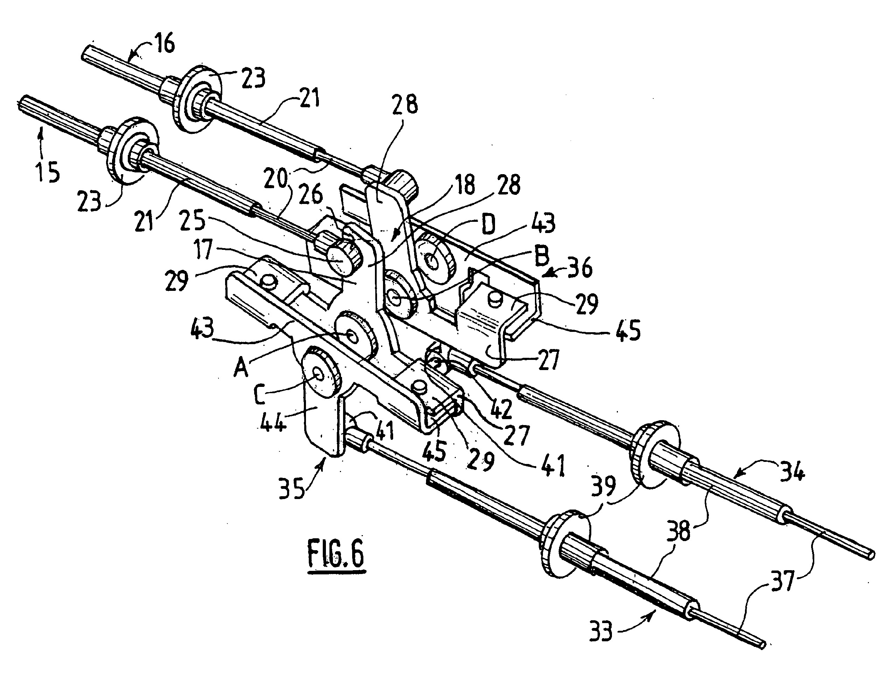

Comme montré plus particulièrement sur les figures 5 et 6, le premier ensemble 14 comprend également un câble de sélection de vitesse 15 et un câble de passage de vitesse 16, ainsi qu'un levier de sélection de vitesse 17 et un levier de passage de vitesse 18. Les leviers de sélection de vitesse 17 et de passage de vitesse 18 sont logés dans le boîtier 19 et sont chacun montés pivotant autour d'un axe sensiblement horizontal en position de fonctionnement de la cabine.

Les câbles de sélection de vitesse 15 et du câble de passage de vitesse 16 sont respectivement formés par un câble métallique 20 entouré d'une gaine 21 en matière plastique.

Chacun des câbles de sélection de vitesse 15 et de passage de vitesse 16 traverse une ouverture de passage 22 ménagée dans une face du boîtier 19 et comprend un embout de gaine 23 fixé sur le boîtier 19 au niveau de l'ouverture de passage 22 correspondante.

L'une des extrémités du câble de sélection de vitesse 15 est reliée à un levier de vitesse 24 logé dans la cabine 12 tandis que l'autre extrémité du câble de sélection de vitesse 15 est reliée au levier de sélection de vitesse 17.

La liaison entre le câble de sélection de vitesse 15 et le levier de sélection de vitesse 17 est réalisée par l'intermédiaire d'un axe 25 solidaire du levier de sélection de vitesse 17 autour duquel est monté pivotant un manchon 26 solidaire de l'extrémité du câble de sélection de vitesse 15 située du côté du levier de sélection de vitesse 17.

De même, l'une des extrémités du câble de passage de vitesse 16 est reliée au levier de vitesse 24 tandis que l'autre extrémité du câble de passage de vitesse 16 est reliée au levier de passage de vitesse 18.

La liaison entre le câble de passage de vitesse 16 et le levier de passage de vitesse 18 est identique à celle entre le câble de sélection de vitesse 15 et le levier de sélection de vitesse 17. Ainsi, l'extrémité du câble de passage de vitesse 16 située du côté du levier de passage de vitesse 18 comprend un manchon 26 monté pivotant autour d'un axe 25 solidaire du levier de passage de vitesse 18.

Les leviers de sélection de vitesse 17 et de passage de vitesse 18 sont identiques et présentent chacun une forme sensiblement en T.

Comme montré plus particulièrement sur la figure 6, chaque levier 17, 18 comprend une première branche 27 sensiblement horizontale dans la position de fonctionnement de la cabine 12, et une seconde branche 28 perpendiculaire à la première branche 27 et sensiblement verticale dans la position de fonctionnement de la cabine 12.

Il doit être noté que l'axe de pivotement A du levier de sélection de vitesse 17 est situé sensiblement dans la zone de liaison entre les première et seconde branches 27, 28 formant celui-ci. De même, l'axe de pivotement B du levier de passage de vitesse 18 est situé sensiblement dans la zone de liaison entre les première et seconde branches 27, 28 formant celui-ci.

La première branche 27 de chaque levier parmi les leviers de sélection de vitesse 17 et de passage de vitesse 18 comprend deux retours 29 ménagés respectivement au niveau de ses extrémités et s'étendant sensiblement perpendiculairement à la première branche 27.

Un élément d'amortissement 46 est fixé sur chacun des retours 29 des leviers de sélection de vitesse 17 et de passage de vitesse 18. Ces différents éléments d'amortissement 46 sont disposés sur les faces inférieures des retours 29 et forment des portions de contact.

Il doit être précisé que l'axe 25 solidaire du levier de sélection de vitesse 17 est ménagé à proximité de l'extrémité libre de la seconde branche 28 du levier de sélection de vitesse 17. De même, l'axe 25 solidaire du levier de passage de vitesse 18 est ménagé à proximité de l'extrémité libre de la seconde branche 28 du levier de passage de vitesse 18.

Le système de commande comprend un second ensemble 31 monté sur le châssis 13 du poids lourd 11.

Comme montré plus particulièrement sur la figure 5, le second ensemble 31 comprend un boîtier ouvert 32 monté sur le châssis 13, l'ouverture du boîtier 32 étant située du côté de la cabine 12 du poids lourd 11 en position de fonctionnement de la cabine 12.

Comme montré sur les figures 5 et 6, le second ensemble 31 comprend également un câble de sélection de vitesse 33 et un câble de passage de vitesse 34, ainsi qu'un levier de sélection de vitesse 35 et un levier de passage de vitesse 36. Les leviers de sélection de vitesse 35 et de passage de vitesse 36 sont logés dans le boîtier 32 et sont chacun montés pivotant autour d'un axe sensiblement horizontal.

Les câbles de sélection de vitesse 33 et du câble de passage de vitesse 34 sont respectivement formés par un câble métallique 37 entouré d'une gaine 38 en matière plastique.

Chacun des câbles de sélection de vitesse 33 et de passage de vitesse 34 traverse une ouverture de passage ménagée dans une face du boîtier 32 et comprend un embout de gaine 39 fixé sur le boîtier 32 au niveau de l'ouverture de passage correspondante.

L'une des extrémités du câble de sélection de vitesse 33 est reliée à un levier d'une boîte de vitesses 40 montée sur le châssis 13 tandis que l'autre extrémité du câble de sélection de vitesse 33 est reliée au levier de sélection de vitesse 35.

La liaison entre le câble de sélection de vitesse 33 et le levier de sélection de vitesse 35 est réalisée par l'intermédiaire d'un axe solidaire du levier de sélection de vitesse 35 autour duquel est monté pivotant un manchon 41 solidaire de l'extrémité du câble de sélection de vitesse 33 située du côté du levier de sélection de vitesse 35.

De même, l'une des extrémités du câble de passage de vitesse 34 est reliée au levier de la boîte de vitesses 40 tandis que l'autre extrémité du câble de passage de vitesse 34 est reliée au levier de passage de vitesse 36.

La liaison entre le câble de passage de vitesse 34 et le levier de passage de vitesse 36 est identique à celle entre le câble de sélection de vitesse 33 et le levier de sélection de vitesse 35. Ainsi, l'extrémité du câble de passage de vitesse 34 située du côté du levier de passage de vitesse 36 comprend un manchon 41 monté pivotant autour d'un axe 42 solidaire du levier de passage de vitesse 36.

Les leviers de sélection de vitesse 35 et de passage de vitesse 36 sont identiques et présentent chacun une forme sensiblement en T.

Comme montré plus particulièrement sur la figure 6, chaque levier 35, 36 comprend une première branche 43 sensiblement horizontale dans la position de fonctionnement de la cabine 12, et une seconde branche 44 perpendiculaire à la première branche 27 et sensiblement verticale dans la position de fonctionnement de la cabine 12.

Il doit être noté que l'axe de pivotement C du levier de sélection de vitesse 35 est situé sensiblement dans la zone de liaison entre les première et seconde branches 43, 44 formant celui-ci. De même, l'axe de pivotement D du levier de passage de vitesse 36 est situé sensiblement dans la zone de liaison entre les première et seconde branches 43, 44 formant celui-ci.

Il doit également être noté que les axes de pivotement A et C des leviers de sélection de vitesse 17, 35 sont confondus, et que les axes de pivotement B et D des leviers de passage de vitesse 18, 36 sont confondus.

La première branche 43 de chaque levier parmi les leviers de sélection de vitesse 35 et de passage de vitesse 36 comprend deux retours 45 ménagés respectivement au niveau de ses extrémités et s'étendant sensiblement perpendiculairement à la première branche 43.

Les faces supérieures de ces retours 45 forment des portions de contact.

Il doit être précisé que l'axe solidaire du levier de sélection de vitesse 35 est ménagé à proximité de l'extrémité libre de la seconde branche 44 du levier de sélection de vitesse 35. De même, l'axe 42 solidaire du levier de passage de vitesse 36 est ménagé à proximité de l'extrémité libre de la seconde branche 44 du levier de passage de vitesse 36.

Comme montré sur la figure 6, en position de fonctionnement de la cabine 12, les portions de contact ménagées sur les levier de sélection de vitesse 17 et de passage de vitesse 18 appartenant au premier ensemble 14 prennent appui respectivement sur les portions de contact ménagées sur les levier de sélection de vitesse 35 et de passage de vitesse 36 appartenant au second ensemble 31.

Dans la position de fonctionnement de la cabine 12, les deux leviers de sélection de vitesse 17, 35 coopèrent entre eux de sorte qu'un pivotement du levier de sélection de vitesse 17 autour de son axe de pivotement A entraîne un pivotement du levier de sélection de vitesse 35 autour de son axe de pivotement C.

De même, en position de fonctionnement de la cabine 12, les deux leviers de passage de vitesse 18, 36 coopèrent entre eux de sorte qu'un pivotement du levier de passage de vitesse 18 autour de son axe de pivotement B entraîne un pivotement du levier de passage de vitesse 36 autour de son axe de pivotement D.

Ainsi, les câbles 15, 33 et leviers 17, 35 de sélection de vitesse des deux ensembles 14, 31 coopèrent entre eux en position de fonctionnement de la cabine 12 de manière à permettre une sélection d'une vitesse de la boîte de vitesses 40 par action du levier de vitesse 24 par un utilisateur.

De même, les câbles 16, 34 et leviers 18, 36 de passage de vitesse des deux ensembles 14, 31 coopèrent entre eux en position de fonctionnement de la cabine 12 de manière à permettre un passage d'une vitesse de la boîte de vitesses 40 par action du levier de vitesse 24 par un utilisateur.

Il doit être noté que les boîtiers 19, 32 appartenant au premier et au second ensembles 14, 31 comprennent des moyens de positionnement complémentaires agencés pour coopérer entre eux en position de fonctionnement de la cabine.

Les moyens de positionnement comprennent une pluralité de tétons 47 ménagés sur un retour 48 tourné vers l'extérieur ménagé au niveau de l'ouverture du boîtier 19, et une pluralité de lumières 49 ménagées sur un retour 50 tourné vers l'extérieur ménagé sur le boîtier 32. Les tétons 47 sont destinés à être reçus dans les lumières 49 de manière à positionner les deux boîtiers 19, 31 l'un par rapport à l'autre en position de fonctionnement de la cabine 12.

Les boîtiers 19, 32 appartenant au premier et au second ensembles 14, 31 comprennent également des moyens de verrouillage des boîtiers. Ces moyens de verrouillage comprennent une plaque de verrouillage 51 dans laquelle sont ménagées des ouvertures 52 comprenant chacune une première portion circulaire et une seconde portion oblongue.

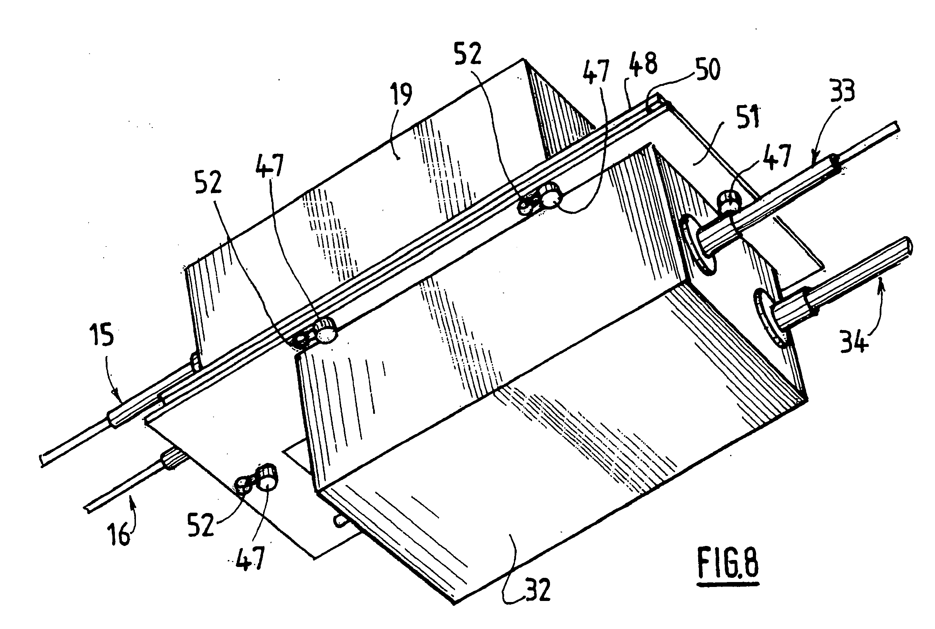

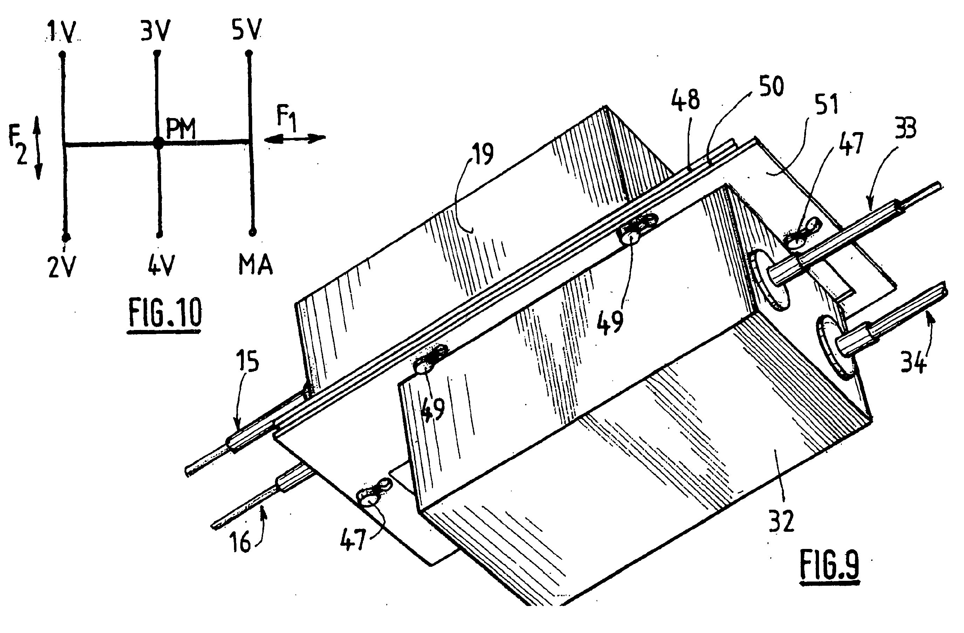

La plaque de verrouillage est mobile entre une position de verrouillage des boîtiers (représentée sur la figure 8) dans laquelle les portions oblongues des ouvertures 52 coopèrent avec les tétons 47 de manière à empêcher un retrait de ces derniers hors des lumières 49, et une position de libération des boîtiers (représentée sur la figure 9) dans laquelle les portions circulaires des ouvertures 52 sont situées en regard des lumières 49 de manière à permettre un retrait des tétons 47 hors des lumières 49.

Le fonctionnement du système de commande va maintenant être décrit.

Comme montré sur la figure 10, lorsqu'un utilisateur souhaite passer une vitesse, il déplace tout d'abord le levier de vitesse 24 selon la double flèche F1 de manière à sélectionner la vitesse souhaitée, puis il déplace le levier de vitesse 24 selon la double flèche F2 de manière à passer la vitesse souhaitée.

Par exemple, lorsqu'un utilisateur souhaite passer du point mort PM à la première vitesse 1V, il déplace tout d'abord le levier de vitesse 24 vers la gauche selon la double flèche F1, puis il déplace ce dernier vers l'avant selon la double flèche F2.

Lorsqu'un utilisateur souhaite passer du point mort PM à la marche arrière MA, il déplace tout d'abord le levier de vitesse 24 vers la droite selon la double flèche F1, puis il déplace ce dernier vers l'arrière selon la double flèche F2.

Le déplacement du levier de vitesse 24 selon la double flèche F1 provoque un déplacement du câble métallique 20 du câble de sélection de vitesse 15, et plus particulièrement un déplacement du manchon 26 relié au levier de sélection de vitesse 17. Ce déplacement du manchon 26 engendre un pivotement du levier de sélection de vitesse 17 autour de son axe de pivotement A. Par l'intermédiaire des retours 29, 45 et des éléments d'amortissement 46, ce pivotement du levier de sélection de vitesse 17 entraîne un pivotement du levier de sélection de vitesse 35 autour de son axe de pivotement C. Ce pivotement du levier de sélection de vitesse 35 autour de son axe de pivotement C entraîne un déplacement du manchon 41 solidaire de l'extrémité du câble métallique 37 du câble de sélection de vitesse. Ce déplacement du manchon 41 déplace le levier de la boîte de vitesses 40 dans une position correspondant à la sélection de la vitesse souhaitée.

De façon similaire, le déplacement du levier de vitesse 24 dans le sens de la double F2 entraîne un pivotement du câble métallique 20 du câble de passage de vitesse 16, et plus particulièrement un déplacement du manchon 26 relié au levier de passage de vitesse 18. Ce déplacement du manchon 26 engendre un pivotement du levier de passage de vitesse 18 autour de son axe de pivotement B. Par l'intermédiaire des retours 29, 45 et des éléments d'amortissement 46, ce pivotement du levier de passage de vitesse 18 entraîne un pivotement du levier de passage de vitesse 36 autour de son axe de pivotement D. Ce pivotement du levier de passage de vitesse 36 autour de son axe de pivotement D entraîne un déplacement du manchon 41 solidaire de l'extrémité du câble métallique 37 du câble de passage de vitesse. Ce déplacement du manchon 41 déplace le levier de la boîte de vitesses dans une position correspondant au passage de la vitesse souhaitée.

Il doit être précisé qu'une poussé du manchon 26 du levier de sélection de vitesse 17 ou du levier de passage de vitesse 18 entraîne une traction du manchon 41 du levier de sélection de vitesse 35 ou du levier de passage de vitesse 36, et qu'une traction du manchon 26 du levier de sélection de vitesse 17 ou du levier de passage de vitesse 18 entraîne une poussée du manchon 41 du levier de sélection de vitesse 35 ou du levier de passage de vitesse 36.

Il doit être noté que le boîtier 32 est monté de manière flottante sur le châssis 13 de telle sorte qu'en position basculée de la cabine 12, le boîtier 32 repose sur le châssis 13, et qu'en position de fonctionnement de la cabine ce dernier est solidaire uniquement du boîtier 19 monté sur la cabine 12. Ces dispositions assurent un parfait fonctionnement du système de commande lorsque des suspensions sont interposées entre la cabine 12 et le châssis 13.

Comme il va de soi, l'invention ne se limite pas à la forme d'exécution de ce système de commande, décrite ci-dessus à titre d'exemple, elle en embrasse au contraire toutes les variantes de réalisation. C'est ainsi notamment que les câbles de commande 15, 16, 33, 34 pourraient être remplacés par des tiges de commande.

## Revendications

1. Système de commande par câble et/ou par tige d'une boîte de vitesses pour poids lourd à cabine basculante, la cabine (12) étant mobile entre une position de fonctionnement dans laquelle elle repose sur le châssis (13) du poids lourd (11) et une position basculée, le système de commande comprenant :
- un premier ensemble (14) monté sur la cabine (12) du poids lourd, le premier ensemble comprenant au moins un moyen de commande (15, 16) et au moins un moyen d'actionnement (17, 18) mobile entre au moins une première et une seconde positions, l'une des extrémités du moyen de commande (15, 16) étant destinée à être reliée à un levier de vitesse (24) du poids lourd (11) logé dans la cabine et l'autre extrémité du moyen de commande (15, 16) étant reliée au moyen d'actionnement (17, 18) de manière à déplacer le moyen d'actionnement entre ses première et seconde positions lors d'un déplacement du levier de vitesse (24) par un utilisateur,
- un second ensemble (31) monté sur le châssis (13) du poids lourd (11), le second ensemble comprenant au moins un moyen de commande (33, 34) et au moins un moyen d'actionnement (35, 36) mobile entre au moins une première et une seconde positions, l'une des extrémités du moyen de commande (33, 34) étant reliée au moyen d'actionnement (35, 36) et l'autre extrémité du moyen de commande étant destinée à être reliée à une boîte de vitesses (40) du poids lourd de manière à provoquer un changement de rapport de vitesse lors d'un déplacement du moyen d'actionnement entre ses première et seconde positions,
les deux moyens d'actionnement étant destinés à coopérer entre eux en position de fonctionnement de la cabine de sorte qu'un déplacement du moyen d'actionnement appartenant au premier ensemble (14) entre ses première et seconde positions entraîne un déplacement du moyen d'actionnement appartenant au second ensemble (31) entre ses première et seconde positions.
**caractérisé en ce que** le moyen d'actionnement appartenant au premier ensemble (14) est un levier d'actionnement (17, 18) monté pivotant autour d'un axe de pivotement (A, B), et **en ce que** le moyen d'actionnement appartenant au second ensemble est un levier d'actionnement (35, 36) monté pivotant autour d'un axe de pivotement (C, D), les deux leviers d'actionnement étant destinés à coopérer entre eux en position de fonctionnement de la cabine de sorte qu'un pivotement du levier d'actionnement appartenant au premier ensemble (14) autour de son axe (A, B) entraîne un pivotement du levier d'actionnement appartenant au second ensemble (31) autour de son axe (C, D).

2. Système de commande selon la revendication 1, **caractérisé en ce qu'**au moins l'un des moyens de commande est un câble de commande ou une tige de commande.

3. Système de commande selon la revendication 1 ou 2, **caractérisé en ce que** chaque levier d'actionnement (17, 18, 35, 36) comprend au moins deux portions de contact disposées de part et d'autre de son axe de pivotement, les deux portions de contact du levier d'actionnement appartenant au premier ensemble étant destinées à coopérer avec les deux portions de contact du levier d'actionnement appartenant au second ensemble, en position de fonctionnement de la cabine.

4. Système de commande selon la revendication 3, **caractérisé en ce qu'**au moins un élément d'amortissement (46) est disposé entre les deux leviers d'actionnement, au niveau de chaque zone de contact entre les deux leviers d'actionnement.

5. Système de commande selon l'une des revendications 1 à 4, **caractérisé en ce que** les deux leviers d'actionnement sont montés pivotant autour d'un axe coïncidant.

6. Système de commande selon l'une des revendications 1 à 5, **caractérisé en ce que** chaque levier d'actionnement (17, 18, 35, 36) présente une forme sensiblement en T comportant une première (27, 43) et une seconde (28, 44) branches, et **en ce que** l'axe de pivotement (A, B, C, D) de chaque levier est situé sensiblement dans la zone de liaison entre les première et une seconde branches.

7. Système de commande selon les revendications 3 et 6, **caractérisé en ce que** les deux portions de contact de chaque levier d'actionnement (17, 18, 35, 36) sont disposées au niveau des extrémités de la branche (27, 43) du levier d'actionnement correspondant s'étendant de part et d'autre de l'axe de pivotement de ce levier d'actionnement, et **en ce que** le moyen de commande (15, 16, 33, 34) correspondant à ce levier d'actionnement est relié à ce dernier au niveau de l'extrémité libre de l'autre branche de ce levier d'actionnement.

8. Système de commande selon la revendication 7, **caractérisé en ce que** les deux portions de contact de chaque levier d'actionnement sont constituées par deux retours (29, 45) ménagés respectivement aux extrémités de la branche (27, 43) du levier d'actionnement s'étendant de part et d'autre de l'axe de pivotement de ce levier d'actionnement et s'étendant sensiblement perpendiculairement à cette branche.

9. Système de commande selon l'une des revendications 1 à 8, **caractérisé en ce que** la liaison entre un moyen de commande et le levier d'actionnement correspondant comprend un axe (25, 42) solidaire du levier d'actionnement autour duquel est monté pivotant un manchon (26, 41) solidaire de l'extrémité du moyen de commande située du côté du levier d'actionnement.

10. Système de commande selon l'une des revendications 1 à 9, **caractérisé en ce que** le premier ensemble (14) comprend un boîtier ouvert (19) monté sur la cabine, l'ouverture du boîtier (19) étant située du côté du châssis (13) en position de fonctionnement de la cabine (12), et **en ce que** le levier d'actionnement appartenant au premier ensemble (14) est logé dans le boîtier (19).

11. Système de commande selon l'une des revendications 1 à 10, **caractérisé en ce que** le second ensemble (31) comprend un boîtier ouvert (32) monté sur le châssis (13), l'ouverture du boîtier étant située du côté de la cabine en position de fonctionnement de la cabine, et **en ce que** le levier d'actionnement appartenant au second ensemble (31) est logé dans le boîtier (32).

12. Système de commande selon les revendications 10 et 11, **caractérisé en ce que** les boîtiers (19, 31) appartenant au premier et au second ensembles comprennent des moyens de positionnement et de verrouillage des boîtiers en position de fonctionnement de la cabine (12).

13. Système de commande selon la revendication 12, **caractérisé en ce que** les moyens de positionnement des boîtiers comprennent une pluralité de tétons (47) ménagés sur l'un des boîtiers, et une pluralité de lumières (48) ménagées sur l'autre boîtier, les tétons (47) étant destinés à être reçus dans les lumières (48) de manière à positionner les deux boîtiers l'un par rapport à l'autre en position de fonctionnement de la cabine.

14. Système de commande selon l'une des revendications 12 et 13, **caractérisé en ce que** les moyens de verrouillage des boîtiers comprennent une plaque de verrouillage (51) mobile entre une position de verrouillage des boîtiers et une position de libération des boîtiers.

15. Système de commande selon l'une des revendications 1 à 14, **caractérisé en ce que** chaque ensemble (14, 31) comprend deux câbles de commande, à savoir un câble de sélection de vitesse (17) et un câble de passage de vitesse (18) et deux leviers d'actionnement, à savoir un levier de sélection de vitesse (35) et un levier de passage de vitesse (36), les câbles et leviers de sélection de vitesse des deux ensembles coopérant entre eux en position de fonctionnement de la cabine de manière à permettre une sélection d'une vitesse de la boîte de vitesses (40) par action du levier de vitesse par un utilisateur, et les câbles et leviers de passage de vitesse des deux ensembles coopérant entre eux en position de fonctionnement de la cabine de manière à permettre un passage d'une vitesse de la boîte de vitesses par action du levier de vitesse par un utilisateur.

## Claims

1. A cable and/or rod control system for a gearbox on a heavy goods vehicle with a tilting cab, the cabin (12) being able to move between an operating position in which it rests on the chassis (13) of the heavy goods vehicle (11) and a tilted position, the control system comprising:
- a first assembly (14), fitted to the cabin (12) of the heavy goods vehicle, the first assembly comprising at least one control means (15, 16) and at least one operating means (17, 18) able to move between at least first and second positions, one end of the control means (15, 16) being designed to be fitted to a gear lever (24) of the heavy goods vehicle (11) housed in the cabin, and the other end of the control means (15, 16) being connected to operating means (17, 18) so as to move the operating means between its first and second positions upon movement of the gear lever (24) by a user,
- a second assembly (31) fitted to the chassis (13) of the heavy goods vehicle (11), the second assembly comprising at least one control means (33, 34) and at least one operating means (35, 36) able to move between at least first and second positions, one end of the control means (33, 34) being connected to the operating means (35, 36) and the other end of the control means being designed to be connected to a gearbox (40) of the heavy goods vehicle so as to bring about a change of gear ratio upon movement of the operating means between the first and second positions,
the two operating means being designed to cooperate with each other in an operating position of the cabin so that a movement of the operating means of the first assembly (14) between its first and second positions brings about a movement of the operating means of the second assembly (31) between its first and second positions,
**characterized in that** the operating means of the first assembly (14) is an operating lever (17, 18) pivotably mounted around a pivot axis (A, B), and **in that** the operating means of the second assembly is an operating lever (35, 36) pivotably mounted around a pivot axis (C, D), the two operating levers being designed to cooperate with each other in the operating position of the cabin so that pivoting the operating lever of the first assembly (14) around its axis (A, B) causes the operating lever of the second assembly (31) to pivot around its axis (C, D).

2. The control system according to claim 1, **characterized in that** at least one of the control means is a control cable or a control rod.

3. The control system according to claim 1 or 2, **characterized in that** each operating lever (17, 18, 35, 36) comprises at least two contact portions arranged on either side of its pivot axis, the two contact portions of the operating lever of the first assembly being designed to cooperate with the two contact portions of the operating lever of the second assembly, in the operating position of the cabin.

4. The control system according to claim 3, **characterized in that** at least one damping element (46) is arranged between the two operating levers, at each contact area between the two operating levers.

5. The control system according to one of claims 1 to 4, **characterized in that** the two operating levers are pivotably mounted around a coinciding axis.

6. The control system according to one of claims 1 to 5, **characterized in that** each operating lever (17, 18, 35, 36) is substantially T-shaped including first (27, 43) and second (28, 44) branches, and **in that** the pivot axis (A, B, C, D) of each lever is situated substantially in the connecting area between the first and second branches.

7. The control system according to claims 3 and 6, **characterized in that** the two contact portions of each operating lever (17, 18, 35, 36) are arranged at the ends of the branch (27, 43) of the corresponding operating lever extending on either side of the pivot axis of said operating lever, and **in that** the control means (15, 16, 33, 34) corresponding to said operating lever is connected thereto at the free end of the other branch of said operating lever.

8. The control system according to claim 7, **characterized in that** the two contact portions of each operating lever are formed by two returns (29, 45) formed respectively at the ends of the branch (27, 43) of the operating lever extending on either side of the pivot axis of said operating lever and extending substantially perpendicular to said branch.

9. The control system according to one of claims 1 to 8, **characterized in that** the connection between a control means and the corresponding operating lever comprises an axis (25, 42) secured to the operating lever around which a sleeve (26, 41) is pivotably mounted secured to the end of the control means situated on the operating lever side.

10. The control system according to one of claims 1 to 9, **characterized in that** the first assembly (14) comprises an open housing (19) fitted to the cabin, the opening of the housing (19) being situated on the chassis (13) side in the operating position of the cabin (12), and **in that** the operating lever of the first assembly (14) is housed in the housing (19).

11. The control system according to one of claims 1 to 10, **characterized in that** the second assembly (31) comprises an open housing (32) fitted to the chassis (13), the opening of the housing being situated on the cabin side in the operating position of the cabin, and **in that** the operating lever of the second assembly (31) is housed in the housing (32).

12. The control system according to claims 10 and 11, **characterized in that** the housings (19, 31) of the first and second assemblies comprise means for positioning and locking the housings in the operating position of the cabin (12).

13. The control system according to claim 12, **characterized in that** the positioning means for the housings comprise a plurality of studs (47) formed on one of the housings, and a plurality of lumens (48) formed on the other housing, the studs (47) being designed to be received in the lumens (48) so as to position the two housings relative to each other in the operating position of the cabin.

14. The control system according to one of claims 12 and 13, **characterized in that** the locking means of the housings comprise a locking plate (51) able to move between a locking position of the housings and a released position of the housings.

15. The control system according to one of claims 1 to 14, **characterized in that** each assembly (14, 31) comprises two control cables, i.e. a gear selector cable (17) and a gear change cable (18), and two operating levers, i.e. a gear selector lever (35) and a gear change lever (36), the gear selector cables and levers of the two assemblies cooperating with each other in the operating position of the cabin so as to make it possible to select a gear of the gearbox (40) by operation of the gear lever by a user, and the gear change cables and levers of the two assemblies cooperating with each other in the operating position of the cabin so as to make it possible to change the gear of the gearbox by operation of the gear lever by a user.

## Patentansprüche

1. System zur Steuerung eines Getriebes für Schwerlaster mit kippbarem Fahrerhaus durch Kabel und/oder durch Stange, wobei die Kabine (12) zwischen einer Funktionsstellung, in der sie auf dem Fahrgestell (13) des Schwerlasters (11) aufliegt, und einer geklappten Stellung bewegbar ist, wobei das Steuerungssystem umfasst:
- eine erste, auf der Kabine (12) des Schwerlasters montierte Gruppe (14), wobei die erste Gruppe mindestens ein Steuermittel (15, 16) und mindestens ein zwischen mindestens einer ersten und einer zweiten Stellung bewegbares Betätigungsmittel (17, 18) umfasst, wobei eines der Enden des Steuermittels (15, 16) dazu bestimmt ist, mit einem Schalthebel (24) des Schwerlasters (11) verbunden zu sein, der in der Kabine untergebracht ist, und das andere Ende des Steuermittels (15, 16) derart mit dem Betätigungsmittel (17, 18) verbunden ist, dass das Betätigungsmittel bei Verschiebung des Steuerhebels (24) durch einen Benutzer zwischen seiner ersten und zweiten Stellung verschoben wird,
- eine zweite, auf dem Fahrgestell (13) des Schwerlasters (11) montierte Gruppe (31), wobei die zweite Gruppe mindestens ein Steuermittel (33, 34) und mindestens ein zwischen mindestens einer ersten und einer zweiten Stellung bewegbares Betätigungsmittel (35, 36) umfasst, wobei eines der Enden des Steuermittels (33, 34) mit dem Betätigungsmittel (35, 36) verbunden ist und das andere Ende des Steuermittels dazu bestimmt ist, mit einem Getriebe (40) des Schwerlasters derart verbunden zu sein, dass bei einer Verschiebung des Betätigungsmittels zwischen seiner ersten und zweiten Stellung eine Änderung des Gangs hergerufen wird,
wobei die zwei Betätigungsmittel dazu bestimmt sind, in Funktionsstellung der Kabine derart miteinander zusammenzuarbeiten, dass eine Verschiebung des zur ersten Gruppe (14) gehörenden Betätigungsmittels zwischen seiner ersten und zweiten Stellung eine Verschiebung des zur zweiten Gruppe (31) gehörenden Betätigungsmittels zwischen seiner ersten und zweiten Stellung bewirkt,
**dadurch gekennzeichnet, dass** das zur ersten Gruppe (14) gehörende Betätigungsmittel ein drehbar um eine Drehachse (A, B) montierter Betätigungshebel (17, 18) ist, und dass das zur zweiten Gruppe gehörende Betätigungsmittel ein drehbar um eine Drehachse (C, D) montierter Betätigungshebel (35, 36) ist, wobei die zwei Betätigungshebel dazu bestimmt sind, miteinander in Funktionsstellung der Kabine derart zusammenzuarbeiten, dass ein Drehen des zur ersten Gruppe (14) gehörenden Betätigungshebels um seine Achse (A, B) ein Drehen des zur zweiten Gruppe (31) gehörenden Betätigungshebels um seine Achse (C, D) bewirkt.

2. Steuerungssystem nach Anspruch 1, **dadurch gekennzeichnet, dass** mindestens eines der Steuermittel ein Steuerkabel oder eine Steuerstange ist.

3. Steuerungssystem nach Anspruch 1 oder 2, **dadurch gekennzeichnet, dass** jeder Betätigungshebel (17, 18, 35, 36) mindestens zwei Kontaktabschnitte umfasst, die auf der einen und der anderen Seite seiner Drehachse angeordnet sind, wobei die zwei Kontaktabschnitte des zur ersten Gruppe gehörenden Steuerhebels dazu bestimmt sind, in Funktionsstellung der Kabine mit den zwei Kontaktabschnitten des zur zweiten Gruppe gehörenden Steuerhebels zusammenzuarbeiten.

4. Steuerungssystem nach Anspruch 3, **dadurch gekennzeichnet, dass** auf Ebene jedes Kontaktbereichs zwischen den zwei Betätigungshebeln mindestens ein Dämpfungsmittel (46) zwischen den zwei Betätigungshebeln angeordnet ist.

5. Steuerungssystem nach einem der Ansprüche 1 bis 4, **dadurch gekennzeichnet, dass** die zwei Betätigungshebel um eine zusammenfallende Achse drehbar montiert sind.

6. Steuerungssystem nach einem der Ansprüche 1 bis 5, **dadurch gekennzeichnet, dass** jeder Betätigungshebel (17, 18, 35, 36) eine etwa T-Form aufweist, die einen ersten (27, 43) und einen zweiten (28, 44) Arm aufweist, und dass sich die Drehachse (A, B, C, D) jedes Hebels etwa im Verbindungsbereich zwischen dem ersten und einem zweiten Arm befindet.

7. Steuerungssystem nach den Ansprüchen 3 und 6, **dadurch gekennzeichnet, dass** die zwei Kontaktabschnitte jedes Betätigungshebels (17, 18, 35, 36) auf Ebene der Enden des Arms (27, 43) des entsprechenden Betätigungshebels angeordnet sind, die sich auf der einen und der anderen Seite der Drehachse dieses Betätigungshebels erstrecken, und dass das diesem Betätigungshebel entsprechende Steuermittel (15, 16, 33, 34) mit diesem auf Ebene des freien Endes des anderen Arms dieses Betätigungshebels verbunden ist.

8. Steuerungssystem nach Anspruch 7, **dadurch gekennzeichnet, dass** die zwei Kontaktabschnitte jedes Betätigungshebels von zwei Rückzügen (29, 45) gebildet werden, die jeweils an den Enden des Arms (27, 43) des Betätigungshebels ausgebildet sind, die sich auf der einen und der anderen Seite der Drehachse dieses Betätigungshebels erstrecken und sich etwa senkrecht zu diesem Arm erstrecken.

9. Steuerungssystem nach einem der Ansprüche 1 bis 8, **dadurch gekennzeichnet, dass** die Verbindung zwischen einem Steuermittel und dem entsprechenden Betätigungshebel eine mit dem Betätigungshebel verbundene Achse (25, 42) umfasst, um die eine Muffe (26, 41) drehend montiert ist, die mit dem Ende des Steuermittels verbunden ist, das sich auf der Seite des Betätigungshebels befindet.

10. Steuerungssystem nach einem der Ansprüche 1 bis 9, **dadurch gekennzeichnet, dass** die erste Gruppe (14) ein auf der Kabine montiertes offenes Gehäuse (19) umfasst, wobei sich die Öffnung des Gehäuses (19) in Funktionsstellung der Kabine (12) auf der Seite des Fahrgestells (13) befindet, und dass der zur ersten Gruppe (14) gehörende Betätigungshebel in dem Gehäuse (19) untergebracht ist.

11. Steuerungssystem nach einem der Ansprüche 1 bis 10, **dadurch gekennzeichnet, dass** die zweite Gruppe (31) ein auf dem Fahrgestell (13) montiertes offenes Gehäuse (32) umfasst, wobei sich die Öffnung des Gehäuses in Funktionsstellung der Kabine auf der Seite der Kabine befindet, und dass der zur zweiten Gruppe (31) gehörende Betätigungshebel in dem Gehäuse (32) untergebracht ist.

12. Steuerungssystem nach den Ansprüchen 10 und 11, **dadurch gekennzeichnet, dass** die zur ersten und zur zweiten Gruppe gehörenden Gehäuse (19, 31) Positionierungs- und Verriegelungsmittel der Gehäuse in Funktionsstellung der Kabine (12) umfassen.

13. Steuerungssystem nach Anspruch 12, **dadurch gekennzeichnet, dass** die Positionierungsmittel der Gehäuse eine Mehrzahl Zapfen (47) umfassen, die auf einem der Gehäuse ausgebildet sind, und eine Mehrzahl Öffnungen (48), die auf dem anderen Gehäuse ausgebildet sind, wobei die Zapfen (47) dazu bestimmt sind, in den Öffnungen (48) derart aufgenommen zu werden, dass die zwei Gehäuse in Funktionsstellung der Kabine im Verhältnis zueinander positioniert werden.

14. Steuerungssystem nach einem der Ansprüche 12 und 13, **dadurch gekennzeichnet, dass** die Verriegelungsmittel der Gehäuse eine zwischen einer Verriegelungsstellung der Gehäuse und einer Freigabestellung der Gehäuse bewegliche Verriegelungsplatte (51) umfassen.

15. Steuerungssystem nach einem der Ansprüche 1 bis 14, **dadurch gekennzeichnet, dass** jede Gruppe (14, 31) zwei Steuerkabel umfasst, nämlich ein Gangauswahlkabel (17) und ein Gangeinlegekabel (18), und zwei Betätigungshebel, nämlich einen Gangauswahlhebel (35) und einen Gangeinlegehebel (36), wobei die Gangauswahlkabel und -hebel der zwei Gruppen in Funktionsstellung der Kabine miteinander derart zusammenarbeiten, dass eine Auswahl eines Gangs des Getriebes (40) durch Betätigung des Schalthebels durch einen Benutzer erlaubt wird, und wobei die Gangeinlegekabel und -hebel der zwei Gruppen in Funktionsstellung der Kabine miteinander derart zusammenarbeiten, dass ein Einlegen von einem Gang des Getriebes durch Betätigung des Schalthebels durch einen Benutzer erlaubt wird.
